(19) Europäisches Patentamt
European Patent Office
Office européen des brevets

(11) **EP 4 126 539 B1**

(12) **EUROPÄISCHE PATENTSCHRIFT**

(45) Veröffentlichungstag und Bekanntmachung des Hinweises auf die Patenterteilung:
**20.12.2023 Patentblatt 2023/51**

(21) Anmeldenummer: **21710304.3**

(22) Anmeldetag: **11.03.2021**

(51) Internationale Patentklassifikation (IPC):
**B32B 17/10** *(2006.01)* **G03B 21/56** *(2006.01)*

(52) Gemeinsame Patentklassifikation (CPC):
(C-Sets verfügbar)
**B32B 17/10844; B32B 17/10036; B32B 17/1044; B32B 17/10577; B32B 17/10587; B32B 17/10761;**
G03B 21/62 (Forts.)

(86) Internationale Anmeldenummer:
**PCT/EP2021/056179**

(87) Internationale Veröffentlichungsnummer:
**WO 2021/197795 (07.10.2021 Gazette 2021/40)**

(54) **VERFAHREN ZUR HERSTELLUNG EINER VERBUNDSCHEIBE MIT DISPLAYFOLIE**

METHOD FOR PRODUCING A COMPOSITE PANE WITH A DISPLAY FILM

PROCÉDÉ DE FABRICATION D'UNE VITRE COMPOSITE POURVUE DE FILM D'AFFICHAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.04.2020 EP 20167726**

(43) Veröffentlichungstag der Anmeldung:
**08.02.2023 Patentblatt 2023/06**

(73) Patentinhaber: **Saint-Gobain Glass France 92400 Courbevoie (FR)**

(72) Erfinder:
• **TINGS, Nino**
  **52249 Eschweiler (DE)**
• **VAN DER MEULEN, Uwe**
  **52385 Nideggen (DE)**
• **KIZMAZ, Ali-Osman**
  **52146 Würselen (DE)**

(74) Vertreter: **SGR Germany-Patents Saint-Gobain Sekurit Deutschland GmbH Glasstraße 1 52134 Herzogenrath (DE)**

(56) Entgegenhaltungen:
**EP-A1- 0 371 949** **US-A1- 2017 320 297**
**US-A1- 2020 012 180**

(52) Gemeinsame Patentklassifikation (CPC): (Forts.)

C-Sets
**B32B 17/10005, B32B 2323/04;**
**B32B 17/10005, B32B 2329/06;**
**B32B 17/10005, B32B 2331/04;**
**B32B 17/10005, B32B 2367/00;**
**B32B 17/10005, B32B 2369/00**

**Beschreibung**

Die Erfindung betrifft ein Verfahren zur Herstellung einer Verbundscheibe mit Displayfolie und eine Verbundscheibe mit Displayfolie sowie deren Verwendung.

Im Fahrzeugbereich und im Baubereich werden vermehrt Verbundscheiben mit Funktionselementen eingesetzt. Dazu gehören beispielsweise Displayfolien, die eine Verwendung der Verglasung als Display ermöglichen, wobei eine Transparenz der Verglasung erhalten bleibt. Über derartige Displays kann der Fahrer eines Kraftfahrzeugs relevante Informationen unmittelbar in der Windschutzscheibe des Kraftfahrzeugs angezeigt bekommen ohne den Blick von der Straße nehmen zu müssen. Anwendungen in Bussen, Zügen oder anderen öffentlichen Verkehrsmitteln, in denen aktuelle Informationen zum Fahrtverlauf oder Werbung auf die Verglasung projiziert werden, sind ebenfalls denkbar.

Zum Anzeigen von Navigationsinformationen in Windschutzscheiben werden häufig die unter dem Begriff Head-up-Display (HUD) bekannten Projektionsanordnungen aus Projektor und Windschutzscheibe mit keilwinkelförmiger thermoplastischer Zwischenschicht und/oder keilwinkelförmigen Scheiben verwendet. Ein Keilwinkel ist dabei zur Vermeidung von Doppelbildern notwendig. Das projizierte Bild erscheint in Form eines virtuellen Bildes in einem gewissen Abstand zur Windschutzscheibe, so dass der Fahrer des Kraftfahrzeugs beispielsweise die projizierte Navigationsinformation als vor ihm auf der Straße befindlich wahrnimmt. Dies mag für Navigationsanwendungen vorteilhaft sein, ist jedoch für andere Informationen, wie beispielsweise Informationen über einen eingehenden Telefonanruf oder Warnhinweise, eher irritierend.

In US 2017/0320297 A1 wird eine Verbundscheibe mit mehrlagiger Zwischenschicht offenbart, die eine Ionomerschicht und eine akustisch dämpfende Schicht umfasst. Das Laminat hat vorteilhafte Eigenschaften hinsichtlich einer Kombination von optischen Eigenschaften, Biegefestigkeit und akustischer Dämpfung.

Ein weiteres bekanntes Konzept zur Darstellung von Informationen auf einer Scheibe ist die Integration von Displayfolien, die auf einer diffusen Reflektion basieren. Diese erzeugen ein reales Bild, das für den Betrachter in der Ebene der Verglasung erscheint. Verglasungen mit transparenten Displayfolien sind beispielsweise aus EP 2 670 594 A1 und EP 2 856 256 A1 bekannt. Die diffuse Reflektion des Displayelementes wird dabei mittels einer rauen internen Oberfläche und einer darauf befindlichen Beschichtung erzeugt. In EP 3 151 062 A1 wird eine Projektionsanordnung zur Integration in einer Automobilverglasung beschrieben.

Displayfolien sind in Form von Projektionsfolien erhältlich, die die diffus reflektierende Schicht auf zumindest einer Trägerfolie enthalten. Solche Displayfolien sind über thermoplastische Verbundfolien in Verglasungen integrierbar. Problematisch ist dabei, dass zum einen die optische Qualität des projizierten Bildes nicht beeinflusst werden darf und zum anderen eine vollständige Entlüftung im Laminationsprozess gewährleistet werden muss um Lufteinschlüsse zu vermeiden.

Der vorliegenden Erfindung liegt daher die Aufgabe zugrunde, ein verbessertes Verfahren zur Herstellung einer Verbundscheibe zu entwickeln, dass eine Verbundscheibe mit einer Displayfolie bereitstellt und eine vereinfachte Entlüftung ermöglicht. Darüber hinaus soll eine Verbundscheibe mit einer Displayfolie mit verbesserter optischer Produktqualität sowie deren Verwendung bereitgestellt werden.

Die Aufgabe der vorliegenden Erfindung wird durch ein Verfahren gemäß dem unabhängigen Anspruch 1 gelöst. Bevorzugte Ausführungen gehen aus den Unteransprüchen hervor.

Die Erfindung betrifft ein Verfahren zur Herstellung einer Verbundscheibe mit Displayfolie. In einem ersten Schritt wird eine erste thermoplastische Verbundfolie unter Erwärmen und Anwendung von Druck an zumindest einer ersten Oberfläche strukturiert. Die erste thermoplastische Verbundfolie mit strukturierter Oberfläche wird daraufhin mit einer Displayfolie und einer zweiten thermoplastischen Verbundfolie flächig übereinander zu einem Schichtstapel angeordnet, wobei die Displayfolie von der ersten thermoplastischen Verbundfolie und der zweiten thermoplastischen Verbundfolie umschlossen wird. Die strukturierte Oberfläche der ersten thermoplastischen Verbundfolie wird dabei unmittelbar angrenzend an der Displayfolie angeordnet, so dass eine gute Entlüftung an der Grenzfläche der benachbarten Folien sichergestellt ist. Der Schichtstapel aus zumindest erster thermoplastischer Verbundfolie, Displayfolie und zweiter thermoplastischer Verbundfolie wird daraufhin unter Erwärmen und Anwendung von Druck zu einem Vorverbund verbunden. Der so entstandene Vorverbund ist sowohl manuell als auch maschinell einfach zu handhaben, ohne dass die Displayfolie dabei beschädigt wird. Der Vorverbund wird auf eine erste Scheibe aufgelegt und mit einer zweiten Scheibe abgedeckt, oder der Vorverbund wird auf eine zweite Scheibe aufgelegt und mit einer ersten Scheibe abgedeckt. Der Schichtstapel aus in dieser Reihenfolge erster Scheibe, Vorverbund und zweiter Scheibe wird durch Autoklavieren zu einer Verbundscheibe verbunden, wobei der Vorverbund eine thermoplastische Zwischenschicht der Verbundscheibe ausbildet, die die erste Scheibe und die zweite Scheibe miteinander verbindet. Die erste thermoplastische Verbundfolie weist eine Dicke von 25 µm bis 100 µm und einen Weichmachergehalt von kleiner oder gleich 10 Gew.-% (Gewichtsprozent) auf, während die zweite thermoplastische Verbundfolie eine Dicke von mindestens 0,3 mm und einen Weichmachergehalt von größer oder gleich 15 Gew.-% (Gewichtsprozent) aufweist.

In einer bevorzugten Ausführungsform des Verfahrens erfolgt vor dem Autoklavieren der Scheibe in Schritt e) zunächst ein Vorverkleben des Schichtstapels. Dazu wird der Vorverbund (Trilayer) zwischen erster Scheibe und zweiter Scheibe eingelegt und zunächst bei Raumtemperatur, danach bei höherer Temperatur vorevakuiert. Die Vorevakuierung bei Raumtemperatur erfolgt beispielsweise für 30 Minuten, gefolgt von einer weiteren Evakuierung für 60 Minuten bei 100 °C. Im Anschluss daran folgt der Autoklavprozess in Schritt e).

Das Strukturieren der ersten thermoplastischen Verbundfolie in Schritt a) des erfindungsgemäßen Verfahrens ermöglicht eine wesentlich vereinfachte Entlüftung des Schichtstapels, so dass Lufteinschlüsse im Vorverbund und in der Verbundscheibe vermieden werden können. Insbesondere dünne thermoplastische Verbundfolien mit einer Dicke von 25 μm bis 100 μm zeigen eine schlechte Entlüftung und vermehrte Lufteinschlüsse. Dies stellt insbesondere bei in der thermoplastischen Zwischenschicht einer Verbundscheibe eingebetteten Displayfolien ein Problem dar. Lufteinschlüsse, Falten und andere Unregelmäßigkeiten im Schichtverbund verschlechtern die Bildqualität der eingebetteten Displayfolie in einem für den Endkunden nicht akzeptablen Maße. Trotz dieser problematischen Verarbeitbarkeit dünner thermoplastischer Verbundfolien ist eine möglichst geringe Schichtdicke zwischen Displayfolie und zumindest der Scheibe, die einer Projektionsvorrichtung zugewandt ist, vorteilhaft. Ein mittels eines Projektors auf die Displayfolie projiziertes Bild muss sämtliche Folienschichten zwischen der dem Projektor zugewandten Scheibe und der Displayfolie passieren. Dabei hat sich gezeigt, dass die Bildqualität mit steigender Schichtdicke abnimmt. Das erfindungsgemäße Verfahren ermöglicht den Einsatz dünner thermoplastischer Verbundfolien mit einer Dicke von 25 μm bis 100 μm, ohne dass die im Zusammenhang mit diesen Folien beschriebenen Entlüftungsprobleme auftreten. Als zweite thermoplastische Verbundfolie wird eine weichmacherhaltige Verbundfolie mit einer Dicke von mindestens 0,3 mm eingesetzt. Die im Vergleich zur ersten thermoplastischen Verbundfolie wesentlich dickere zweite thermoplastische Verbundfolie sichert eine ausreichende mechanische Stabilität der Verbundscheibe nach Lamination sowie eine gute mechanische Stabilität und Handhabbarkeit des Vorverbunds. Die geringe Dicke der ersten thermoplastischen Verbundfolie ist für eine hohe Bildqualität erforderlich. Folien in solch geringen Schichtdicke sind jedoch nur mit einem entsprechend geringen Weichmachergehalt von maximal 10 Gew.-% realisierbar. Dieser geringe Weichmachergehalt führt zu einer sehr stark verminderten Fließfähigkeit des Materials bei Erwärmung und im Autoklavprozess. Damit einher geht auch die erschwerte Entlüftung des Folienstapels. Der Entlüftungsproblematik wird durch die erfindungsgemäße Strukturierung der ersten thermoplastischen Verbundfolie entgegengewirkt. Die mangelnde Fließfähigkeit der ersten thermoplastischen Verbundfolie wird hingegen durch die gezielte Wahl einer zweiten thermoplastischen Verbundfolie mit guten Fließeigenschaften ausgeglichen. Durch erfindungsgemäßen höheren Weichmachergehalt der zweiten thermoplastischen Verbundfolie ist diese wesentlich fließfähiger als die erste thermoplastische Verbundfolie und kann so die umlaufende Kante der Displayfolie bei Ausbildung des Vorverbunds und im nachfolgenden Laminationsprozesses sicher umschließen und vor Beschädigungen schützen.

Die erste thermoplastische Verbundfolie und die zweite thermoplastische Verbundfolie weisen jeweils eine erste Oberfläche und eine zweite Oberfläche auf, wobei als Oberflächen der Folien die beiden zueinander parallelen flächigen Außenseiten bezeichnet werden. Erste Oberfläche und zweite Oberfläche bedeuten bei einem folienartigen Element die zwei großen Flächen, die in der Verbundscheibe parallel zu Außenscheibe und Innenscheibe angeordnet sind. Seitenkanten beschreiben die dazu orthogonal verlaufenen Flächen des Funktionselements, die bei folienartigen Elementen sehr dünn ausgebildet sind. Als erste Oberfläche der ersten thermoplastischen Verbundfolie und erste Oberfläche der zweiten thermoplastischen Verbundfolie werden dabei die Folienoberflächen bezeichnet, die unmittelbar angrenzend zu der Displayfolie angeordnet werden. Diese ersten Oberflächen werden auch als innere Oberfläche der ersten thermoplastischen Verbundfolie und innere Oberfläche der zweiten thermoplastischen Verbundfolie bezeichnet. Die den jeweils inneren Oberflächen der ersten thermoplastischen Verbundfolie und der zweiten thermoplastischen Verbundfolie gegenüberliegenden zweiten Oberflächen werden auch als äußere Oberflächen bezeichnet. Die äußeren Oberflächen der Verbundfolien sind die der Displayfolie abgewandten Außenseiten der Verbundfolie, die gemeinsam die Außenseite des Vorverbunds bilden.

Weichmacher sind chemische Verbindungen, die Kunststoffe weicher, flexibler, geschmeidiger und/oder elastischer machen. Sie verschieben den thermoelastischen Bereich von Kunststoffen hin zu niedrigeren Temperaturen, so dass die Kunststoffe im Bereich der Einsatz-Temperatur die gewünschten elastischeren Eigenschaften aufweisen. Bevorzugte Weichmacher sind Carbonsäureester, insbesondere schwerflüchtige Carbonsäureester, Fette, Öle, Weichharze und Campher. Weitere Weichmacher sind bevorzugt aliphatische Diester des Tri- bzw. Tetraethylenglykols. Besonders bevorzugt werden als Weichmacher 3G7, 3G8 oder 4G7 eingesetzt, wobei die erste Ziffer die Anzahl der Ethlenglycoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel $C_4H_9CH$ $(CH_2CH_3)$ $CO$ $(OCH_2CH_2)_3O_2CCH$ $(CH_2CH_3)$ $C_4H_9$.

Eine Strukturierung einer Oberfläche bedeutet im Sinne der Erfindung, dass die entsprechende Oberfläche mit einer Struktur umfassend höher liegende Bereiche und tiefer liegende Bereiche ausgestattet wird. Insofern wird die Rauigkeit der betreffenden Oberfläche erhöht, die betreffende Verbundfolie wird also aufgeraut. Eine Erhöhung der Rauigkeit wird als Rautiefe $R_z$ gemäß der Definition aus DIN EN ISO 4768:1990 gemessen, wobei $R_z$ der arithmetische Mittelwert der Einzelrautiefen $R_{zi}$ aufeinanderfolgender Einzelmessstrecken ist:

$$R_z = \frac{1}{n} \left( R_{z1} + R_{z2} + \ldots + R_{zn} \right)$$

Die Einzelrautiefe $R_{zi}$ ist die Summe aus der Höhe der größten Profilspitze und der Tiefe des größten Profiltals des Rauheitsprofils innerhalb einer Einzelmessstrecke.

Die Rauigkeit von folienförmigen Materialien ist aufgrund der typischerweise zur Folienherstellung verwendeten Produktionsprozesse von der Richtung der Messtrecke abhängig. In Erstreckungsrichtung der Folie ist dabei mit einer anderen Rauigkeit zu rechnen als quer zur Erstreckungsrichtung der Folie. Die Erstreckungsrichtung der Folie entspricht dabei der Abrollrichtung der üblicherweise als Rollenware erhältlichen Folien. Die für die Rauigkeit angegebenen bevorzugten Wertebereiche beziehen sich dabei auf zumindest eine Folienrichtung. Für eine optimierte Entlüftung ist es ausreichend wenn die angegebenen Werte in einer Richtung erreicht werden. Auf diese Weise entstehen entlang der Profiltäler kanalartige Entlüftungsstrukturen über die eingeschlossene Luft in Richtung der Folienränder entweichen kann.

Erfindungsgemäß wird zumindest die erste Oberfläche der ersten thermoplastischen Verbundfolie strukturiert. Dies bewirkt eine entscheidende Verbesserung der Entlüftung, so dass Lufteinschlüsse im Scheibenverbund wesentlich vermindert werden. Optional können auch weitere Oberflächen der ersten und/oder zweiten thermoplastischen Verbundfolie vor Lamination der Verbundscheibe strukturiert werden.

In einer bevorzugten Ausführungsform wird die erste thermoplastische Verbundfolie in Schritt a) so aufgeraut, dass nach Schritt a) zumindest an der ersten Oberfläche der ersten thermoplastischen Verbundfolie eine mittlere Rautiefe $R_z$ von mindestens 15 $\mu$m gemäß DIN EN ISO 4768:1990 vorliegt. Dadurch wird die optische Qualität der Verbundscheibe mit einlaminierter Displayfolie weiter gesteigert.

Die Strukturierung der Folienoberflächen ist mittels verschiedener Verfahren denkbar. Dabei kann die Verbundfolie beispielsweise umgeformt werden oder auch mittels subtraktiver oder additiver Verfahren strukturiert werden.

In einer bevorzugten Ausführungsform wird die erste thermoplastische Verbundfolie mittels einer Prägevorrichtung strukturiert. Dabei wird die Oberfläche der ersten thermoplastischen Verbundfolie unter Anwendung von Druck und Wärme umgeformt. Die dazu verwendete Prägevorrichtung umfasst bevorzugt zumindest eine erste Platte mit einer ersten Prägeauflage und eine zweite Platte mit einer zweiten Prägeauflage. Die erste Platte und die zweite Platte dienen als struktureller Träger der jeweiligen Prägeauflage, wobei die Prägeauflagen die Struktur der zu strukturierenden Verbundfolie bestimmen. Die zu strukturierende thermoplastische Verbundfolie wird flächig zwischen der ersten Prägeauflage und der zweiten Prägeauflage eingelegt. In der Prägevorrichtung resultiert demnach ein Schichtstapel aus erster Platte, erster Prägeauflage, thermoplastischer Verbundfolie, zweiter Prägeauflage und zweiter Platte, wobei durch Annähern der Platten aneinander und Zusammendrücken der Platten die thermoplastische Verbundfolie an mindestens einer ersten Oberfläche geprägt und so mit einer Oberflächenstrukturierung versehen wird. Die Oberflächen der ersten thermoplastischen Verbundfolie können wahlweise beide strukturiert werden oder auch nur eine der beiden Oberflächen kann strukturiert werden. Der Strukturierungsgrad der jeweiligen Oberfläche ist in Abhängigkeit von der Struktur der jeweils benachbart zur Oberfläche verwendeten Prägeauflage frei wählbar und kann im Wesentlichen unabhängig voneinander für beide Oberflächen gewählt werden.

Die erste Prägeauflage und/oder die zweite Prägeauflage weisen an der der ersten thermoplastischen Verbundfolie zugewandten Oberfläche eine mittlere Rautiefe $R_z$ von mindestens 20 $\mu$m gemäß DIN EN ISO 4768:1990 auf. Inwiefern eine oder beide Prägeauflagen eine entsprechende Strukturierung aufweisen ist abhängig von der gewünschten Strukturierung der ersten thermoplastischen Verbundfolie bzw. weiterer zu strukturierender Verbundfolien.

Die erste thermoplastische Verbundfolie wird in Schritt a) bei einer Temperatur von 60°C bis 120°C, bevorzugt 80°C bis 110°C geprägt. In diesem Temperaturbereich ist eine vereinfachte Umformung möglich.

Optional kann auch die zweite thermoplastische Verbundfolie bereits vor Erstellung des Vorverbunds in Schritt c) unter Erwärmen und Anwendung von Druck geprägt werden. Dies ist generell nicht notwendig. Die zweite thermoplastische Verbundfolie weist einen wesentlich höheren Weichmachergehalt auf als die erste thermoplastische Verbundfolie. Die eingangs beschriebene Entlüftungsproblematik ist jedoch vor allem bei dünnen Verbundfolien mit geringen Weichmachergehalten zu beobachten. Diese zweiten thermoplastischen Verbundfolien höherer Dicke mit höherem Weichmachergehalt sind im Schichtstapel wesentlich leichter zu entlüften als die ersten thermoplastischen Verbundfolien. Darüber hinaus weisen kommerziell erhältliche thermoplastische Verbundfolien mit einer Dicke von mindestens 0,3 mm häufig eine zumindest höhere Oberflächenrauigkeit auf, die ebenfalls die Entlüftung verbessert. Somit ist eine Strukturierung der zweiten thermoplastischen Verbundfolie nicht zwangsläufig notwendig. Eine Strukturierung der zweiten thermoplastischen Verbundfolie ist bevorzugt, sofern die einzusetzende zweite thermoplastische Verbundfolie eine mittlere Rautiefe $R_z$ von weniger als 10 $\mu$m gemäß DIN EN ISO 4768:1990 an der der Displayfolie zuzuwendenden erste Oberfläche aufweist. Es ist dabei ausreichend, wenn diese minimal erforderliche Rautiefe entlang mindestens einer Folienrichtung gegeben ist.

Sofern eine Strukturierung der zweiten thermoplastischen Verbundfolie vor Schritt c) gewünscht ist, so kann diese, analog zu dem zur Strukturierung der ersten thermoplastischen Verbundfolie beschriebenen Verfahren, in eine Prägevorrichtung, mindestens umfassend eine erste Platte mit einer ersten Prägeauflage und eine zweite Platte mit einer zweiten Prägeauflage, flächig zwischen der ersten Prägeauflage und der zweiten Prägeauflage eingelegt werden und durch Zusammendrücken der ersten Platte und der zweiten Platte mit einer Oberflächenstrukturierung versehen werden. Zur Strukturierung der zweiten thermoplastischen Verbundfolie weisen die erste Prägeauflage und/oder die zweite Prägeauflage an der der zweiten thermoplastischen Verbundfolie zugewandten Oberfläche eine mittlere Rautiefe $R_z$ von mindestens 20 $\mu$m gemäß DIN EN ISO 4768:1990 auf. In der Praxis wird die zweite thermoplastische Verbundfolie, sofern überhaupt eine Strukturierung vorgesehen ist, in der Regel mittels der gleichen Prägeauflagen strukturiert wie die erste thermoplastische Verbundfolie. In diesem Fall kann auf einen Austausch der Prägeauflagen oder den Aufbau einer zweiten Prägestation verzichtet werden.

Die zweite thermoplastische Verbundfolie wird bevorzugt bei einer Temperatur von 60°C bis 120°C, besonders bevorzugt 80°C bis 110°C, geprägt um ein Verformen der Oberfläche zu erleichtern.

Die zweite thermoplastische Verbundfolie enthält bevorzugt mindestens 20 Gew.-%, besonders bevorzugt mindestens 30 Gew.-% und insbesondere mindestens 40 Gew.-% eines Weichmachers. Dieser im Vergleich zur ersten thermoplastischen Verbundfolie hohe Weichmachergehalt verbessert die Fließeigenschaften des thermoplastischen Materials bei Erwärmen. Die zweite thermoplastische Verbundfolie kann somit bei Lamination im Autoklaven etwaige Lücken im Verbund, zum Beispiel an Folienkanten, schließen. Der in der zweiten thermoplastischen Verbundfolie enthaltene Weichmacher umfasst bevorzugt aliphatische Diester des Tri- bzw. Tetraethylenglykols, besonders bevorzugt Triethylenglykol-bis-(2-ethylhexanoat), oder besteht daraus.

Die erste thermoplastische Verbundfolie enthält einen Weichmacheranteil von kleiner oder gleich 5 Gew.-%, bevorzugt kleiner oder gleich 0,5 Gew.-% und ist besonders bevorzugt im Wesentlichen weichmacherfrei. Eine solche Ausführung der ersten thermoplastischen Verbundfolie ist insbesondere vorteilhaft um die erste thermoplastische Verbundfolie in geringen Dicken auszugestalten.

Die erste und die zweite thermoplastische Verbundfolie enthalten bevorzugt mindestens 60 Gew.-%, besonders bevorzugt mindestens 70 Gew.-%, insbesondere mindestens 90 Gew.-% und beispielsweise mindestens 97 Gew.-% Polyvinylbutyral (PVB). Alternativ dazu können auch thermoplastische Verbundfolien umfassend Ethylenvinylacetat (EVA) und/oder Polyurethan (PU) verwendet werden.

In einer bevorzugten Ausführungsform des Verfahrens wird der Schichtstapel in Schritt c) unter Erwärmen und Druck zu einem Vorverbund verbunden und gleichzeitig mit einer Oberflächenstruktur versehen. Der Schichtstapel aus in dieser Reihenfolge erster thermoplastischer Verbundfolie, Displayfolie und zweiter thermoplastischer Verbundfolie wird dazu in einer Prägevorrichtung, mindestens umfassend eine erste Platte mit einer ersten Prägeauflage und eine zweite Platte mit einer zweiten Prägeauflage zu einem Vorverbund verpresst. Dazu wird der Schichtstapel flächig zwischen der ersten Prägeauflage und der zweiten Prägeauflage eingelegt und durch Zusammendrücken der ersten Platte und der zweiten Platte unter Erwärmen zu einem Vorverbund verbunden. Dabei wird die gleiche Prägeanordnung verwendet wie bereits in Schritt a) beschrieben. Die Prägeauflagen können die gleiche Rauigkeit aufweisen wie die zur Strukturierung der ersten thermoplastischen Verbundfolie verwendeten Prägeauflagen oder gegebenenfalls auch davon abweichen. Die erste Prägeauflage und/oder die zweite Prägeauflage weisen bevorzugt an der der ersten thermoplastischen Verbundfolie und/oder der zweiten thermoplastischen Verbundfolie zugewandten Oberfläche eine mittlere Rautiefe $R_z$ von mindestens 20 $\mu$m gemäß DIN EN ISO 4768:1990 auf. Der Vorverbund wird in der Prägevorrichtung bevorzugt bei einer Temperatur von 60°C bis 120°C, besonders bevorzugt 80°C bis 110°C, verbunden und geprägt.

Das Prägen des Vorverbunds, aufgrund der drei zusammengefügten Lagen auch als Trilayer bezeichnet, ist hinsichtlich einer weiteren Verbesserung der Entlüftung besonders vorteilhaft. Dabei wird sowohl eine Strukturierung der zweiten Oberfläche der ersten thermoplastischen Verbundfolie und der zweiten Oberfläche der zweiten thermoplastischen Verbundfolie erreicht, als auch die Struktur der zur Displayfolie gewandten ersten Oberflächen der ersten thermoplastischen Verbundfolie und der zweiten thermoplastischen Verbundfolie weiter vorteilhaft beeinflusst.

In einer besonders bevorzugten Ausführungsform des erfindungsgemäßen Verfahrens wird in Schritt a) die erste thermoplastische Verbundfolie zwischen einer ersten Prägeauflage und einer zweiten Prägeauflage strukturiert, so dass die erste thermoplastische Verbundfolie zumindest an der ersten Oberfläche nach Strukturierung eine Rautiefe $R_z$ von mindestens 20 $\mu$m, bevorzugt mindestens 30 $\mu$m, besonders bevorzugt mindestens 40 $\mu$m, beispielsweise 45 $\mu$m bis 55 $\mu$m, gemäß DIN EN ISO 4768:1990 aufweist. In einer besonders bevorzugten Ausführungsform werden sowohl die erste Oberfläche als auch die zweite Oberfläche der ersten thermoplastischen Verbundfolie strukturiert, wobei an der ersten Oberfläche eine Rautiefe $R_z$ von mindestens 30 $\mu$m, bevorzugt mindestens 40 $\mu$m, und an der zweiten Oberfläche eine Rautiefe $R_z$ von mindestens 15 $\mu$m, bevorzugt mindestens 20 $\mu$m, vorliegt. Die auf diese Weise strukturierte erste thermoplastische Verbundfolie wird gemäß dem erfindungsgemäßen Verfahren mit einer Displayfolie und einer zweiten thermoplastischen Verbundfolie zu einem Schichtstapel zusammengelegt und in Schritt c) in der Prägevorrichtung und Druck und Erwärmen zu einem Vorverbund verbunden, wobei die zu den Prägeauflagen gewandten zweiten Oberflächen der ersten thermoplastischen Verbundfolie und der zweiten thermoplastischen Verbundfolie nach Erstellen des Vorverbunds eine Rautiefe $R_z$ von mindestens 15 $\mu$m, bevorzugt mindestens 20 $\mu$m aufweisen. Dies ist vorteilhaft um auch an der Kontaktfläche zwischen den Scheiben der Verbundscheibe und der angrenzenden thermoplastischen Verbundfolie eine verbesserte Entlüftung zu erreichen.

Für den im erfindungsgemäßen Verfahren verwendeten flächigen Folienvorverbund aus thermoplastischen Verbundfolien und dazwischenliegender Funktionsfolie, hier Displayfolie, ist auch die Bezeichnung Trilayer geläufig. Bevorzugt wird der Vorverbund im Wesentlichen in den Abmaßen der herzustellenden Verbundscheibe zugeschnitten. Davor, danach oder gleichzeitig dazu erfolgt bevorzugt ein umlaufender Rückschnitt der Displayfolie. Dabei wird im Randbereich des Vorverbunds selektiv die Displayfolie entfernt. Die umlaufende Kante der Displayfolie ist demnach gegenüber der umlaufenden Kante des Vorverbundes in Richtung der Flächenmitte des Vorverbundes zurückversetzt. Im Randbereich des Vorverbundes verbleiben demnach lediglich die erste thermoplastische Verbundfolie und die zweite thermoplastische Verbundfolie. Dabei entsteht ein zumindest abschnittsweise gemeinsamer Überstand der ersten thermoplastischen Verbundfolie und der zweiten thermoplastischen Verbundfolie, in dem diese sich flächig berühren. Dadurch wird die Kante des Displayelementes mittels der thermoplastischen Verbundfolien verschlossen. Der Überstand der ersten und der zweiten thermoplastischen Verbundfolie über die Kante der Displayfolie können zueinander identisch sein oder sich unterscheiden. Ein geringer Versatz beider Überstände zueinander kann auch durch ein nicht vollständig deckungsgleiches Aufeinanderlegen der Folien im Schichtstapel zustande kommen. Auch in einem solchen Fall besteht jedoch ein abschnittsweiser gemeinsamer Überstand, der eine sichere Versiegelung gewährleistet. Die Begriffe "Überstand" bzw. "überstehen" bedeuten wie allgemein üblich verwendet: in lateraler (horizontaler) Richtung über etwas hinausragen. In diesem Fall ragt die Sperrfolie in der Ebene des Funktionselements über das Funktionselement hinaus. Lateral bedeutet hier, wie allgemein üblich verwendet: seitlich oder seitwärts. Auch im Hinblick auf eine sichere Versiegelung des Randbereichs ist die erfindungsgemäße Kombination einer weichmacherarmen thermoplastischen Verbundfolie mit einer weichmacherreicheren thermoplastischen Verbundfolie vorteilhaft. Die weichmacherärmere Verbundfolie ist vorteilhaft für die optische Qualität eines auf die Displayfolie projizierten Bildes, während die gegenüberliegende weichmacherreichere Verbundfolie durch ihre verbesserten Fließeigenschaften den Bereich des Rückschnitts der Displayfolie bei Lamination im Autoklavverfahren ausfüllen kann.

Sofern die Verbundscheibe weitere Komponenten, wie Beschichtungen, weitere Folienkomponenten und/oder Funktionselemente, umfasst, werden diese vor Lamination der Verbundscheibe aufgebracht. Eine gegebenenfalls notwendige elektrische Kontaktierung von Komponenten erfolgt ebenfalls vor dem Laminieren der Verbundscheibe.

Eventuell vorhandene Drucke, beispielsweise opake Abdeckdrucke oder aufgedruckte Sammelleiter zur elektrischen Kontaktierung etwaiger Funktionselemente werden bevorzugt im Siebdruckverfahren aufgebracht.

Das Laminieren erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Die Erfindung umfasst des Weiteren eine Verbundscheibe enthaltend eine Displayfolie hergestellt in dem erfindungsgemäßen Verfahren. Die Verbundscheibe umfasst in dieser Reihenfolge als Schichtstapel laminiert eine erste Scheibe, erste thermoplastische Verbundfolie, eine Displayfolie, eine zweite thermoplastische Verbundfolie und eine zweite Scheibe. Die erste thermoplastische Verbundfolie, die Displayfolie und die zweite thermoplastische Verbundfolie sind dabei in Form eines Vorverbunds eingesetzt, auch als Trilayer bezeichnet. Die erste Scheibe, die erste thermoplastische Verbundfolie und die Displayfolie sind unmittelbar benachbart zueinander angeordnet, wobei die erste Scheibe die Innenscheibe einer Kraftfahrzeugverglasung ist. Die erste thermoplastische Verbundfolie hat eine Dicke von 25 $\mu$m bis 100 $\mu$m und einen Weichmachergehalt von kleiner oder gleich 10 Gewichtsprozent (Gew.-%), während die zweite thermoplastische Verbundfolie eine Dicke von mindestens 0,3 mm und einen Weichmachergehalt von größer oder gleich 15 Gew.-% aufweist.

Die erste thermoplastische Verbundfolie ist jeweils in unmittelbarer Nachbarschaft der Innenscheibe und der Displayfolie angeordnet, so dass ein durch die Innenscheibe auf die Displayfolie fokussierter Lichtstrahl nur eine sehr kurze Wegstrecke durch die dünne thermoplastische Verbundfolie verläuft. Dadurch wird die Bildqualität des auf die Displayfolie projizierten Bildes nur geringfügig beeinflusst. Gleichzeitig ermöglicht die im erfindungsgemäßen Verfahren angewandte Strukturierung der ersten thermoplastischen Verbundfolie diese unmittelbar angrenzend der Displayfolie in den Schichtverbund einzubringen, ohne dass Lufteinschlüsse im Schichtverbund auftreten. Somit weist die erfindungsgemäße Verbundscheibe eine gute Bildqualität eines darauf projizierten Bildes sowie eine gute optische Qualität ohne störende Lufteinschlüsse auf.

Die bereits bei der Beschreibung des erfindungsgemäßen Verfahrens gemachten Ausführungen bezüglich der aus dem Verfahren hervorgehenden Verbundscheibe, gelten selbstverständlich auch für die Scheibe selbst. Umgekehrt gelten die bezüglich der Verbundscheibe gemachten Angaben, beispielsweise zu bevorzugten Foliendicken, auch für das erfindungsgemäße Verfahren.

Die Displayfolie umfasst eine diffus reflektierende Schicht oder Oberfläche, die einfallendes Licht diffus reflektiert. Diffuse Reflektion ist dabei begrifflich als nicht gerichtete Reflektion aufzufassen. An der diffus reflektierenden Schicht wird beispielsweise ein aus dem Inneren eines Fahrzeugs auf die Innenscheibe der Fahrzeugverglasung gerichtetes Bild eines Projektors dargestellt, wobei die Displayfolie ein reales Bild in der Ebene der Verbundscheibe zeigt. Ein reales Bild unterscheidet sich dabei von einem virtuellen Bild, wobei das virtuelle Bild in einer anderen Ebene als die Projektionsebene liegt und das reale Bild in der Projektionsebene gezeigt wird. Bei solchen diffus reflektierenden Displayfolien führen Entlüftungsprobleme im Laminat zu besonders großen Verlusten hinsichtlich der Bildqualität. Der erfindungsgemäße Aufbau der Verbundscheibe schafft hier Abhilfe.

Die Displayfolie enthält beispielsweise eine diffuse reflektierende interne Oberfläche mit einer diffus reflektierenden Beschichtung. Die diffuse reflektierende Beschichtung umfasst bevorzugt Nanopartikel oder Mikropartikel wie Siliziumdioxidpartikel, polymere Partikel oder Flüssigkristalle. Alternativ dazu können auch Metall- oder Metalloxidpartikel verwendet werden. Insbesondere weisen die genannten Nanopartikel oder Mikropartikel eine Kugelform auf und/oder sind transparent oder durchscheinend.

Zur Realisierung der Erfindung haben sich insbesondere Displayfolien mit einer diffus reflektierenden Beschichtung umfassend Titanoxidpartikel ($TiO_x$-Partikel) oder Silberpartikel als vorteilhaft erwiesen. In gleicher Weise sind Displayfolien mit organischen diffus reflektierenden Beschichtungen enthaltend cholesterische Flüssigkristalle sehr gut geeignet. In einer besonders bevorzugten Ausführungsform umfasst die Displayfolie cholesterische Flüssigkristalle, die in einer Matrix orientiert sind.

Ein mögliches Beispiel einer Displayfolie ist in WO 2017/204103 A1 beschrieben, wobei die Folie zufällig dispergierte cholesterische Flüssigkristall-Tropfen umfasst, die durch eine im Brechungsindex angepasste Schicht abgedeckt sind. Die cholesterischen Flüssigkristalltropfen haben im Wesentlichen die Form einer Halbkugel, deren Radius von dem Kontaktwinkel zwischen Folie und Tropfen abhängig ist. Eine Wellenlängenselektivität der Displayfolie ist ebenso möglich, wie beispielsweise in WO 2016/175183 A1 beschrieben.

Wenn eine Oberfläche der Displayfolie eine zufällige Nanostruktur oder Mikrostruktur umfasst, so ist bevorzugt eine andere Oberfläche der Displayfolie glatt.

In einer weiteren bevorzugten Ausführungsform umfasst die Displayfolie eine strukturierte Kunststofffolie, wobei diese mehrere strukturierte Oberflächen umfasst und die Eigenschaften der Displayfolie über die Steigung der Kontaktflächen zwischen benachbarten strukturierten Schichten bestimmt wird. Beispielhafte Ausführungsformen und Methoden zur Strukturierung der Schichten der Displayfolie sind in WO 2012/104547 A1 beschrieben. Im Vergleich zu den partikelbasierten Displayfolien ist bei den strukturierten Displayfolien häufig eine geringere Trübung und ein besserer Leuchtdichtefaktor (auch als "Screen Gain" bezeichnet) zu erreichen.

Bevorzugt umfasst die Displayfolie als Trägermaterial eine Folie enthaltend Polyethylen (PE), Polyethylenterephthalat (PET), Polymethylmethacrylat (PMMA), Triacetylcellulose (TAC) und/oder Polycarbonat.

Geeignete Displayfolien sind grundsätzlich kommerziell erhältlich, wobei als gängige Trägermaterialien Triacetylcellulose, Polymethylmethacrylat oder Polycarbonat verwendet werden. Diese Materialien zeigen nur eine sehr geringe Haftung zu Glasscheiben. Die blasenfreie Entlüftung solcher Displayfolien im Schichtstapel mit einer nicht strukturierten thermoplastischen Verbundfolie gestaltet sich sehr schwierig, wobei das erfindungsgemäße Verfahren hier Abhilfe schafft.

Die Verbundscheibe kann beispielsweise die Windschutzscheibe oder die Dachscheibe eines Fahrzeugs oder eine andere Fahrzeugverglasung sein, beispielsweise eine Trennscheibe in einem Fahrzeug, bevorzugt in einem Schienenfahrzeug oder einem Bus.

Die Begriffe Außenscheibe und Innenscheibe beschreiben willkürlich zwei verschiedene Scheiben. Insbesondere kann die Außenscheibe als eine zweite Scheibe und die Innenscheibe als eine erste Scheibe bezeichnet werden.

Ist die Verbundscheibe dafür vorgesehen, in einer Fensteröffnung eines Fahrzeugs oder eines Gebäudes einen Innenraum gegenüber der äußeren Umgebung abzutrennen, so wird mit Innenscheibe im Sinne der Erfindung die dem Innenraum (Fahrzeuginnenraum) zugewandte Scheibe (erste Scheibe) bezeichnet. Mit Außenscheibe wird die der äußeren Umgebung zugewandte Scheibe (zweite Scheibe) bezeichnet.

Die Displayfolie ist zwischen der ersten thermoplastischen Verbundfolie und der zweiten thermoplastischen Verbundfolie zumindest abschnittsweise angeordnet ist. Die erste und zweite thermoplastische Verbundfolie weisen üblicherweise dieselben Abmessungen wie die erste und die zweite Scheibe auf.

Die Dicke der ersten thermoplastischen Verbundfolie beträgt bevorzugt von 30 $\mu m$ bis 70 $\mu m$, besonders bevorzugt 40 $\mu m$ bis 60 $\mu m$, beispielsweise 50 $\mu m$.

Die Dicke der zweiten thermoplastischen Verbundfolie beträgt bevorzugt 0,3 mm bis 2 mm, besonders bevorzugt von 0,3 mm bis 1 mm, insbesondere von 0,5 mm bis 0,8 mm, beispielsweise 0,76 mm.

Die Displayfolie ist über einen Bereich der ersten thermoplastischen Verbundfolie mit der ersten Scheibe und über einen Bereich der zweiten thermoplastischen Verbundfolie mit der zweiten Scheibe verbunden. Die erste und die zweite thermoplastische Verbundfolie sind flächig aufeinander angeordnet und im Schichtstapel miteinander laminiert, wobei die Displayfolie zwischen die beiden Schichten eingelegt ist. Die mit der Displayfolie überlappenden Bereiche der thermoplastischen Verbundfolien bilden dann die Bereiche, welche die Displayfolie mit den Scheiben verbinden. In anderen Bereichen der Scheibe, wo die thermoplastischen Verbundfolien direkten Kontakt zueinander haben, können sie beim Laminieren verschmelzen. Dazu trägt vor allem die gute Fließfähigkeit der zweiten thermoplastischen Verbundfolie bei.

Die erfindungsgemäße Verbundscheibe kann eine erste thermoplastische Verbundfolie und eine zweite thermoplastische Verbundfolie oder auch mehrere erste und/oder zweite thermoplastische Verbundfolien enthalten. Anstelle einer ersten und/oder zweiten thermoplastischen Verbundfolie kann sich demnach auch ein jeweils zweilagiger, dreilagiger oder mehrlagiger Folienstapel aus thermoplastischen Verbundfolien und/oder weiteren funktionellen Folien befinden, wobei die einzelnen Folien gleiche oder unterschiedliche Eigenschaften aufweisen. Bevorzugt umfassen die erste thermoplastische Verbundfolie und die zweite thermoplastische Verbundfolie jeweils genau eine Folienlage. Dadurch werden zusätzliche Foliengrenzflächen, an denen eine Entlüftung sicherzustellen ist, vermieden. Eine thermoplastische Verbundfolie kann auch aus Abschnitten unterschiedlicher thermoplastischer Folien gebildet werden, deren Seitenkanten aneinandergrenzen.

Die Verbundscheibe mit Displayfolie kann vorteilhafterweise als Windschutzscheibe oder Dachscheibe ausgebildet sein.

Eine Windschutzscheibe weist eine Oberkante und eine Unterkante auf sowie zwei zwischen Oberkante und Unterkante verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Eine Kraftfahrzeug-Dachscheibe weist eine Vorderkante, die in Richtung der Windschutzscheibe weist, und eine Hinterkante die in Richtung der Fahrzeugheckscheibe weist, auf. Die verbleibenden Kanten der Dachscheibe sind die Seitenkanten. Die Seitenkanten verlaufen zwischen Vorderkante und Hinterkante der Scheibe.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Steuerung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Die Displayfolie weist eine ausreichend gute Transmission im sichtbaren Bereich des Spektrums auf, die ermöglicht die Displayfolie in einer Windschutzscheibe sowohl innerhalb als auch außerhalb des zentralen Sichtfeldes anzuordnen.

Die Windschutzscheibe ist bevorzugt für ein Kraftfahrzeug vorgesehen, besonders bevorzugt für einen Personenkraftwagen.

Windschutzscheiben und Dachscheiben weisen typischerweise einen umlaufenden peripheren Abdeckdruck aus einer opaken Emaille auf, der insbesondere dazu dient, den zum Einbau der Scheibe verwendeten Kleber vor UV-Strahlung zu schützen und optisch zu verdecken. Ist die erfindungsgemäße Verbundscheibe eine Windschutzscheibe oder Dachscheibe, so weist bevorzugt sowohl die erste Scheibe als auch die zweite Scheibe einen Abdeckdruck auf, so dass die Durchsicht im Randbereich von beiden Seiten gehindert wird.

Die Displayfolie kann auch Aussparungen oder Löcher aufweisen, etwa im Bereich anderer Funktionselemente und/oder Sensorfenster. Diese Bereiche sind dafür vorgesehen, andere funktionale Folienelemente in den Schichtverbund zu integrieren, oder die Verbundscheibe in diesem Bereich mit Sensoren auszustatten, deren Funktion durch eine Displayfolie im Strahlengang beeinträchtigt werden würde. Es ist auch möglich, die Verbundscheibe mit mindestens zwei voneinander getrennten Displayfolien zu realisieren, wobei zwischen den Displayfolien ein Abstand besteht, der einen Raum für Sensorfenster oder Funktionselemente bereitstellt.

Die erste und die zweite Scheibe sind bevorzugt aus Glas gefertigt, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Silikat-Glas, oder aus starren klaren Kunststoffen, beispielsweise Polycarbonat oder Polymethylmethacrylat. Die Scheiben können klar sind, oder auch getönt oder gefärbt. Windschutzscheiben müssen dabei im zentralen Sichtbereich eine ausreichende Lichttransmission aufweisen, bevorzugt mindestens 70 % im Haupt-Durchsichtbereich A gemäß ECE-R43.

Die erste Scheibe, die zweite Scheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen).

Die Dicke der ersten und der zweiten Scheibe kann breit variieren und so den Erfordernissen im Einzelfall angepasst werden. Die erste und die zweite Scheibe weisen bevorzugt Dicken von 0,5 mm bis 5 mm, besonders bevorzugt von 1 mm bis 3 mm auf.

Die Erfindung umfasst weiterhin die Verwendung einer erfindungsgemäßen Verbundscheibe als Windschutzscheibe oder Dachscheibe eines Fahrzeugs, wobei die Displayfolie als Projektionsfläche für ein Bild dient, das von einem im Fahrzeuginneren befindlichen Projektor erzeugt wird.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:

Figur 1a    einen Querschnitt einer ersten thermoplastischen Verbundfolie zwischen einer ersten Platte mit einer ersten Prägeauflage und einer zweiten Platte mit einer zweiten Prägeauflage,

Figur 1b    einen Querschnitt eines Vorverbunds aus erster thermoplastischer Verbundfolie, Displayfolie und zweiter thermoplastischer Verbundfolie zwischen einer ersten Platte mit einer ersten Prägeauflage und einer zweiten Platte mit einer zweiten Prägeauflage,

Figur 2a    eine Draufsicht auf eine Ausgestaltung der erfindungsgemäßen Verbundscheibe,

Figur 2b    einen Querschnitt durch die Verbundscheibe aus Figur 2a entlang der Schnittlinie A-A' und

Figur 3    ein Ausführungsbeispiel des erfindungsgemäßen Verfahrens anhand eines Flussdiagramms.

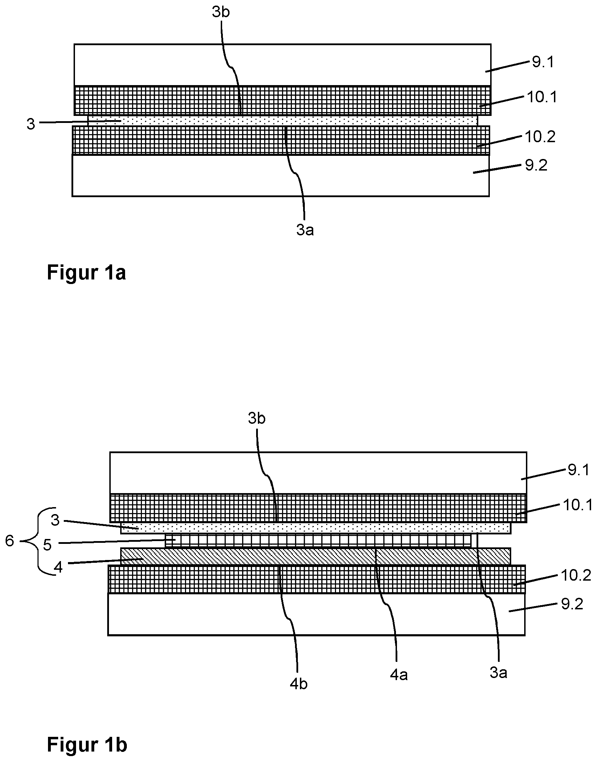

Figur 1a zeigt eine erste thermoplastische Verbundfolie 3, die zwischen einer ersten Platte 9.1 mit einer ersten Prägeauflage 10.1 und einer zweiten Platte 9.2 mit einer zweiten Prägeauflage 10.2 eingelegt ist. Die Prägeauflagen 10.1, 10.2 sind dabei an den der thermoplastischen Verbundfolie 3 zugewandten Oberflächen der jeweiligen Platte 9.1, 9.2 angeordnet. Die Prägeauflagen 10.1, 10.2 und die Platten 9.1, 9.2 sind Teil einer Prägevorrichtung, deren Details nicht gezeigt, dem Fachmann jedoch geläufig sind. Die Platten 9.1, 9.2 bestehen aus Holzplatten, wobei auch andere Materialien geeignet sind. Zur Strukturierung thermoplastischer Verbundfolien, wie im vorliegenden Fall der ersten thermoplastischen Verbundfolie 3, werden Prägeauflagen 10.1, 10.2 aus Polyethylenfolien verwendet, die ihrerseits eine Oberflächenstrukturierung jeweils an der der ersten thermoplastischen Verbundfolie 3 benachbarten Oberfläche aufweisen. Alternativ dazu sind auch andere Materialien, bevorzugt polymere Folien, als Prägeauflagen denkbar. Dabei ist lediglich erforderlich, dass die Prägeauflagen selbst eine Oberflächenstruktur tragen. Darüber hinaus ist eine leichte Ablösbarkeit der Prägeauflagen 10.1, 10.2 von den Oberflächen der thermoplastischen Verbundfolie 3 vorteilhaft. Diese ist bei den genannten Polyethylenfolien der Fall. Die Polyethylenfolien als Prägeauflagen 10.1, 10.2 tragen an den der ersten thermoplastischen Verbundfolie 3 zugewandten Oberflächen jeweils eine Oberflächenstrukturierung mit einer Rautiefe $R_z$ gemäß DIN EN ISO 4768:1990 von 20 $\mu$m bis 70 $\mu$m. Die erste thermoplastische Verbundfolie 3 besteht aus PVB mit einer Dicke von 50 $\mu$m mit einem Weichmachergehalt von weniger als 0,5 Gew.-% und ist bevorzugt im Wesentlichen weichmacherfrei. Derartige dünne weichmacherarme Folien sind kommerziell erhältlich, weisen allerdings nur eine unzureichende Oberflächenstrukturierung auf. Nach dem erfindungsgemäßen Verfahren wird die erste thermoplastische Verbundfolie 3 in Schritt a) an zumindest einer ersten Oberfläche 3a strukturiert. Dies erfolgt bevorzugt mittels der in Figur 1a beschriebenen Prägevorrichtung aus Platten 9.1, 9.2 und Prägeauflagen 10.1, 10.2. Bevorzugt werden die erste Oberfläche 3a und die zweite Oberfläche 3b der ersten thermoplastischen Verbundfolie 3 in der Prägevorrichtung der Figur 1a durch Prägen bei einer Temperatur von 100 °C über einen Zeitraum von ungefähr einer Stunde strukturiert. In Tabelle 1 sind die Oberflächenrauigkeiten der ersten thermoplastischen Verbundfolie 3 vor und nach Strukturierung in Schritt a) des erfindungsgemäßen Verfahrens anhand von Messungen der Erfinder verdeutlicht. Die Strukturierung erfolgte mittels der in Figur 1a beschriebenen Prägevorrichtung. Die Messung der Rautiefe $R_z$ gemäß DIN EN ISO 4768:1990 erfolgte an beiden Oberflächen der ersten thermoplastischen Verbundfolie jeweils in zwei zueinander orthogonalen Richtungen, wobei eine dieser Richtungen der Erstreckungsrichtung der Verbundfolie entspricht. Die Erstreckungsrichtung der Verbundfolie ist die Richtung, in der die in der Regel als Rollenware erhältliche Verbundfolie von der Rolle abrollbar ist, wobei die in dieser Richtung gemessenen Rautiefen mit $R_{zL}$ bezeichnet sind. Die in der Tabelle als $R_{zQ}$ gekennzeichneten Werte wurden in Messrichtung orthogonal zur Erstreckungsrichtung aufgenommen. Die Messwerte der Rautiefe sind als Mittelwert aus jeweils 5 Einzelmessungen unter Angabe der Standardabweichung $\sigma$ gegeben.

**Tabelle 1**

|  | Rautiefe vor Schritt a) | Rautiefe nach Schritt a) |
|---|---|---|
| **erste Oberfläche 3a** | $R_{zL}$ = 8,85 $\mu$m, $\sigma$ = 0,42 $\mu$m | $R_{zL}$ = 49,5 $\mu$m, $\sigma$ = 2,0 $\mu$m |
|  | $R_{zQ}$ = 9,96 $\mu$m, $\sigma$ = 0,41 $\mu$m | $R_{zQ}$ = 16,0 $\mu$m, $\sigma$ = 5,90 $\mu$m |
| **zweite Oberfläche 3b** | $R_{zL}$ = 8,27 $\mu$m, $\sigma$ = 0,34 $\mu$m | $R_{zL}$ = 22,90 $\mu$m, $\sigma$ = 7,25 $\mu$m |
|  | $R_{zQ}$ = 8,50 $\mu$m, $\sigma$ = 0,35 $\mu$m | $R_{zQ}$ = 32,40 $\mu$m, $\sigma$ = 5,10 $\mu$m |

Sowohl an der ersten Oberfläche als auch an der zweiten Oberfläche der ersten thermoplastischen Verbundfolie konnte eine wesentliche Erhöhung der Rauigkeit erreicht werden. Die auf diese Weise vorgeprägte erste thermoplastische Verbundfolie wird gemäß dem erfindungsgemäßen Verfahren mit der Displayfolie und der zweiten thermoplastischen Verbundfolie zu einem Vorverbund verbunden und mit zumindest zwei Scheiben zu einer Verbundscheibe laminiert.

Figur 1b zeigt einen Querschnitt eines Vorverbunds 6 aus erster thermoplastischer Verbundfolie 3, Displayfolie 5 und zweiter thermoplastischer Verbundfolie 4 zwischen einer ersten Platte 9.1 mit einer ersten Prägeauflage 10.1 und einer zweiten Platte 9.2 mit einer zweiten Prägeauflage 10.2. Die Prägevorrichtung aus erster Platte 9.1, erster Prägeauflage 10.1, zweiter Platte 9.2 und zweiter Prägeauflage 10.2 entspricht der in Figur 1a beschriebenen. Die gemäß Figur 1a geprägte erste thermoplastische Verbundfolie 3 wird mit der Displayfolie 5 und der zweiten thermoplastischen Verbundfolie 4 so zu einem Schichtstapel zusammengelegt, dass die Displayfolie 5 von den thermoplastischen Verbundfolien 3, 4 umschlossen ist. Die zweite thermoplastische Verbundfolie 4 weist eine Dicke von 0,76 mm auf und besteht aus 78 Gew.-% Polyvinylbutyral (PVB) und 20 Gew.-% Triethylene Glykol bis(2-ethylhexanoate) als Weichmacher. Die zweite thermoplastische Verbundfolie 4 entspricht in ihren Abmaßen der ersten thermoplastischen Verbundfolie 3 und ist im Wesentlichen deckungsgleich mit dieser zugeschnitten. Eine erste Oberfläche 4a der zweiten thermoplastischen Verbundfolie 4 wird im Schichtstapel des Vorverbunds 6 zur Displayfolie 5 ausgerichtet, während eine zweite Oberfläche 4b der zweiten thermoplastischen Verbundfolie 4 von der Displayfolie 5 wegweist und eine äußere Oberfläche des Vorverbunds bildet. Analog dazu ist die erste thermoplastische Verbundfolie 3 ebenso ausgerichtet, dass die erste Oberfläche 3a in unmittelbarer Nachbarschaft zur Displayfolie 5 liegt und die zweite Oberfläche 3b von der Displayfolie 5 abgewandt ist. Die Displayfolie 5 umfasst eine Trägerfolie aus Triacetylcellulose, die mit einer diffus reflektierenden Oberfläche ausgestattet ist und kommerziell erhältlich ist. Die Displayfolie 5 hat eine Dicke von kleiner als 0,05 mm und ist so zwischen den thermoplastischen Verbundfolien 3, 4 eingelegt, dass diese einen umlaufend über die umlaufende Kante der Displayfolie hinausragenden Randbereich aufweisen. Die umlaufende Kante der Displayfolie 5 ist somit gegenüber der gemeinsamen umlaufenden Kante der thermoplastischen Verbundfolien 3, 4 in Richtung der Flächenmitte der Folien zurückversetzt. Dadurch ist die umlaufende Kante der Displayfolie 5 nach Erstellen des Vorverbunds 6 vor Umgebungseinflüssen geschützt. Der auf diese Weise zusammengelegte Schichtstapel aus in dieser Reihenfolge zweiter thermoplastischer Verbundfolie 4, Displayfolie 5 und erster thermoplastischer Verbundfolie 3 wird wie in Figur 1b gezeigt in die Prägevorrichtung (beschrieben in Figur 1a) eingelegt und bei einer Temperatur von 100 °C über einen Zeitraum von ungefähr einer Stunde geprägt. Durch das beim Prägen erfolgende Zusammenpressen der Folien unter Erwärmung werden diese zu einem Vorverbund 6 verbunden. Darüber hinaus wird durch Prägen des Vorverbunds 6 dessen Oberflächenrauigkeit weiter erhöht, was zu einer weiteren Verbesserung der Entlüftung führt. Nach dem Prägen des Vorverbunds 6 liegen die über die Displayfolie 5 hinausragenden Randbereiche der ersten thermoplastischen Verbundfolie 3 und der zweiten thermoplastischen Verbundfolie 4 zumindest teilweise aufeinander auf, wobei die erste Oberfläche 3a der ersten thermoplastischen Verbundfolie 3 und die erste Oberfläche 4a der zweiten thermoplastischen Verbundfolie 4 sich zumindest abschnittsweise berühren.

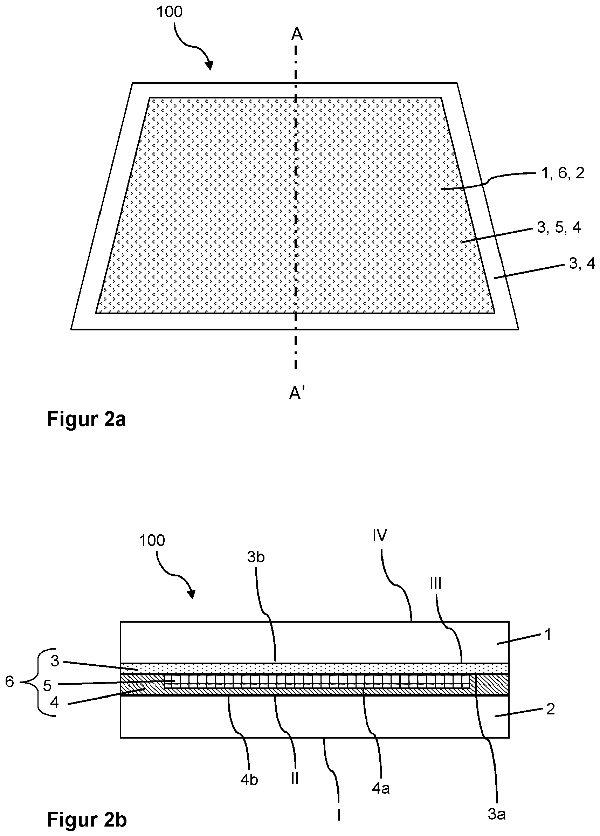

Figuren 2a und 2b zeigen eine erfindungsgemäße Verbundscheibe 100 als Windschutzscheibe eines Fahrzeugs, wobei Figur 2a eine Draufsicht und Figur 2b einen Querschnitt durch die Verbundscheibe 100 der Figur 2a entlang der Schnittlinie A-A' zeigt. Auf einer zweiten Scheibe 2 aus einem klaren Kalk-Natron-Glas mit einer Dicke von 2,1 mm wurde der Trilayer (Vorverbund 6 gemäß Figur 1b) aus der ersten thermoplastischen Verbundfolie 3, der Displayfolie 5 und der zweiten thermoplastischen Verbundfolie 4 aufgelegt, der Schichtstapel mit einer ersten Scheibe 1 abgeschlossen und im Autoklavverfahren laminiert, woraus sich die Verbundscheibe 100 gemäß Figuren 2a und 2b ergibt. Die erste Scheibe 1 weist eine Dicke von 1,6 mm auf und besteht beispielsweise ebenfalls aus einem klaren Kalk-Natron-Glas. In diesem Fall stellt die zweite Scheibe 2 die Außenscheibe der Windschutzscheibe dar und ist gemeinsam mit der ersten Scheibe 1 als Innenscheibe kongruent gebogen. Die zweite Scheibe 2 weist eine Außenseite I auf, die zur Fahrzeugumgebung weist und der die Innenseite II der zweiten Scheibe 2 gegenüberliegt. Die erste Scheibe 1 verfügt über eine Außenseite IV, die zum Fahrzeuginnenraum gerichtet ist und eine Innenseite III. Die Innenseite II der zweiten Scheibe 2 und die Innenseite III der ersten Scheibe 1 sind über den Vorverbund 6 miteinander verbunden. Die erste thermoplastische Verbundfolie 3 ist in unmittelbarer Nachbarschaft zur Innenscheibe (erste Scheibe 1) angebracht, so dass ein aus dem Fahrzeuginnenraum auf die Displayfolie 5 projiziertes Bild lediglich durch eine thermoplastische Verbundfolie geringer Dicke beeinflusst wird. Somit kann eine hohe Bildqualität erreicht werden. Ferner wird mittels des erfindungsgemäß hergestellten Vorverbunds 6 mit vorgeprägter erster thermoplastischer Verbundfolie 3 eine gute Entlüftung bei Lamination der Verbundscheibe 100 sichergestellt. In Versuchen der Erfinder konnten auf diese Weise Einschlüsse von Luftblasen und dadurch entstehende optische Störungen oder Beeinträchtigungen vermieden werden. Im Randbereich der Verbundscheibe 100, in dem die umlaufende Kante der Displayfolie 5 gegenüber der gemeinsamen umlaufenden Kante der thermoplastischen Verbundfolien 3, 4 zurückversetzt ist, wird die dadurch entstehende Lücke im Laminationsprozess mit dem Material der weichmacherhaltigen und gut fließfähigen zweiten thermoplastischen Verbundfolie 4 gefüllt. Für die zweite thermoplastische Verbundfolie 4 gemäß Figuren 1b, 2a und 2b kann optional ein sogenanntes "High Flow PVB" verwendet werden, welches im Vergleich zu Standard-PVB-Folien ein stärkeres Fließverhalten aufweist.

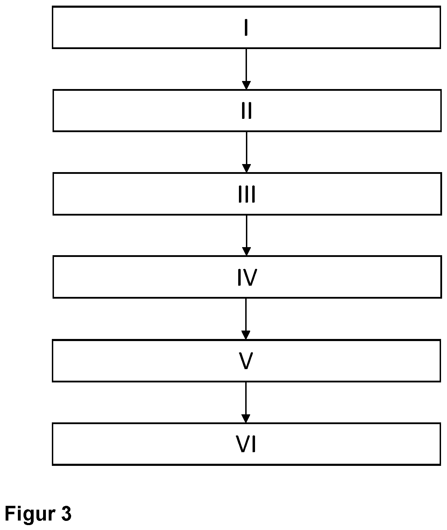

Figur 3 zeigt eine bevorzugte Ausführungsform des erfindungsgemäßen Verfahrens mindestens umfassend die Schritte:

I Strukturieren einer ersten thermoplastischen Verbundfolie 3 mit einer Dicke von 25 $\mu$m bis 100 $\mu$m und einem

Weichmachergehalt von kleiner oder gleich 10 Gew.-% unter Erwärmen und Anwendung von Druck an zumindest einer ersten Oberfläche 3a, bevorzugt an einer ersten Oberfläche 3a und einer zweiten Oberfläche 3b,

II Bereitstellen einer zweiten thermoplastischen Verbundfolie 4 mit einer Dicke von mindestens 0,3 mm und einem Weichmachergehalt von größer oder gleich 15 Gew.-% und einer Displayfolie 5 und
Zusammenlegen eines Schichtstapels aus in dieser Reihenfolge flächig übereinander angeordnet erster thermoplastischer Verbundfolie 3 aus Schritt I, Displayfolie 5 und zweiter thermoplastischer Verbundfolie 4, wobei die erste Oberfläche 3a der ersten thermoplastischen Verbundfolie 3 unmittelbar benachbart zur Displayfolie 5 angeordnet wird,

III Verbinden und Strukturieren des Schichtstapels aus erster thermoplastischer Verbundfolie 3, Displayfolie 5 und zweiter thermoplastischer Verbundfolie 4 unter Erwärmen und Anwendung von Druck zu einem Vorverbund 6,

IV Auflegen des Vorverbunds 6 auf eine erste Scheibe 1 oder eine zweite Scheibe 2 und Abdecken mit einer zweiten Scheibe 2 oder einer ersten Scheibe 1,

V Vorevakuieren des Schichtstapels aus in dieser Reihenfolge erster Scheibe 1, Vorverbund 6 und zweiter Scheibe 2 zuerst bei Raumtemperatur für 30 Minuten, danach bei 100 °C für 60 Minuten,

VI Verbinden des Schichtstapels aus in dieser Reihenfolge erster Scheibe 1, Vorverbund 6 und zweiter Scheibe 2 durch Autoklavieren zu einer Verbundscheibe (100).

Die nach dem Verfahren gemäß Figur 3 laminierte Verbundscheibe zeigt keinerlei Lufteinschlüsse und eine gute optische Qualität.

Bezugszeichenliste:

| 1 | erste Scheibe |
| 2 | zweite Scheibe |
| 3 | erste thermoplastische Verbundfolie |
| 3a | erste Oberfläche der ersten thermoplastischen Verbundfolie |
| 3b | zweite Oberfläche der ersten thermoplastischen Verbundfolie |
| 4 | zweite thermoplastische Verbundfolie |
| 4a | erste Oberfläche der zweiten thermoplastischen Verbundfolie |
| 4b | zweite Oberfläche der zweiten thermoplastischen Verbundfolie |
| 5 | Displayfolie |
| 6 | Vorverbund |
| 9.1 | erste Platte |
| 9.2 | zweite Platte |
| 10.1 | erste Prägeauflage |
| 10.2 | zweite Prägeauflage |
| 100 | Verbundscheibe |
| $R_z$ | Rautiefe |
| AA' | Schnittlinie |
| I | Außenseite der zweiten Scheibe |
| II | Innenseite der zweiten Scheibe |
| III | Innenseite der ersten Scheibe |
| IV | Außenseite der ersten Scheibe |

**Patentansprüche**

**1.** Verfahren zur Herstellung einer Verbundscheibe (100) mit Displayfolie (5), wobei zumindest

a) eine erste thermoplastische Verbundfolie (3) unter Erwärmen und Anwendung von Druck an zumindest einer ersten Oberfläche (3a) strukturiert wird,

b) ein Schichtstapel aus in dieser Reihenfolge flächig übereinander angeordnet zumindest erster thermoplastischer Verbundfolie (3), Displayfolie (5) und einer zweiten thermoplastischen Verbundfolie (4) erstellt wird, wobei die strukturierte erste Oberfläche (3a) der ersten thermoplastischen Verbundfolie (3) unmittelbar benachbart zur Displayfolie (5) angeordnet wird,

c) der Schichtstapel aus erster thermoplastischer Verbundfolie (3), Displayfolie (5) und zweiter thermoplastischer Verbundfolie (4) unter Erwärmen und Anwendung von Druck zu einem Vorverbund (6) verbunden wird,

d) der Vorverbund (6) auf eine erste Scheibe (1) oder eine zweite Scheibe (2) aufgelegt wird und mit einer zweiten Scheibe (2) oder einer ersten Scheibe (1) abgedeckt wird,

e) der Schichtstapel aus in dieser Reihenfolge erster Scheibe (1), Vorverbund (6) und zweiter Scheibe (2) durch Autoklavieren zu einer Verbundscheibe (100) verbunden wird,

wobei die erste thermoplastische Verbundfolie (3) eine Dicke von 25 $\mu$m bis 100 $\mu$m und einen Weichmachergehalt von kleiner oder gleich 10 Gew.-% aufweist und die zweite thermoplastische Verbundfolie (4) eine Dicke von mindestens 0,3 mm und einen Weichmachergehalt von größer oder gleich 15 Gew.-% aufweist.

2. Verfahren nach Anspruch 1, wobei zumindest die erste Oberfläche (3a) der ersten thermoplastischen Verbundfolie (3) nach Schritt a) eine mittlere Rautiefe $R_z$ von mindestens 15 $\mu$m gemäß DIN EN ISO 4768:1990 aufweist.

3. Verfahren nach Anspruch 1 oder 2, wobei die erste thermoplastische Verbundfolie (3) in Schritt a) in einer Prägevorrichtung, mindestens umfassend eine erste Platte (9.1) mit einer ersten Prägeauflage (10.1) und eine zweite Platte (9.2) mit einer zweiten Prägeauflage (10.2), flächig zwischen der ersten Prägeauflage (10.1) und der zweiten Prägeauflage (10.2) eingelegt wird und die erste thermoplastische Verbundfolie (3) durch Zusammendrücken der ersten Platte (9.1) und der zweiten Platte (9.2) mit einer Oberflächenstrukturierung versehen wird und wobei die erste Prägeauflage (9.1) und/oder die zweite Prägeauflage (9.2) an der der ersten thermoplastischen Verbundfolie (3) zugewandten Oberfläche eine mittlere Rautiefe $R_z$ von mindestens 20 $\mu$m gemäß DIN EN ISO 4768:1990 aufweisen.

4. Verfahren nach Anspruch 3, wobei die erste thermoplastische Verbundfolie (3) bei einer Temperatur von 60°C bis 120°C, bevorzugt 80°C bis 110°C, geprägt wird.

5. Verfahren nach einem der Ansprüche 1 bis 4, wobei die zweite thermoplastische Verbundfolie (4) vor Schritt c) unter Erwärmen und Anwendung von Druck geprägt wird.

6. Verfahren nach Anspruch 5, wobei die zweite thermoplastische Verbundfolie (4) vor Schritt c) in einer Prägevorrichtung, mindestens umfassend eine erste Platte (9.1) mit einer ersten Prägeauflage (10.1) und eine zweite Platte (9.2) mit einer zweiten Prägeauflage (10.2), flächig zwischen der ersten Prägeauflage (10.1) und der zweiten Prägeauflage (10.2) eingelegt wird und die erste thermoplastische Verbundfolie (3) durch Zusammendrücken der ersten Platte (9.1) und der zweiten Platte (9.2) mit einer Oberflächenstrukturierung versehen wird und wobei die erste Prägeauflage (9.1) und/oder die zweite Prägeauflage (9.2) an der der zweiten thermoplastischen Verbundfolie (4) zugewandten Oberfläche eine mittlere Rautiefe $R_z$ von mindestens 20 $\mu$m gemäß DIN EN ISO 4768:1990 aufweisen.

7. Verfahren nach Anspruch 6, wobei die zweite thermoplastische Verbundfolie (4) bei einer Temperatur von 60°C bis 120°C, bevorzugt 80°C bis 110°C, geprägt wird.

8. Verfahren nach einem der Ansprüche 1 bis 7, wobei die zweite thermoplastische Verbundfolie (4) mindestens 20 Gew.-%, bevorzugt mindestens 30 Gew.-% und insbesondere mindestens 40 Gew.-% eines Weichmachers enthalten und der Weichmacher bevorzugt aliphatische Diester des Tri- bzw. Tetraethylenglykols, besonders bevorzugt Triethylenglykol-bis-(2-ethylhexanoat), enthält oder daraus besteht.

9. Verfahren nach einem der Ansprüche 1 bis 8, wobei die erste thermoplastische Verbundfolie (4) einen Weichmacheranteil von kleiner oder gleich 5 Gew.-%, bevorzugt kleiner oder gleich 0,5 Gew.-%, enthält und besonders bevorzugt im Wesentlichen weichmacherfrei ist.

10. Verfahren nach einem der Ansprüche 1 bis 9, wobei die thermoplastischen Verbundfolien (3,4) mindestens 60 Gew.-%, bevorzugt mindestens 70 Gew.-%, besonders bevorzugt mindestens 90 Gew.-% und insbesondere mindestens 97 Gew.-% Polyvinylbutyral (PVB) enthalten.

**11.** Verfahren nach einem der Ansprüche 1 bis 10, wobei in Schritt c) der Schichtstapel aus in dieser Reihenfolge erster thermoplastischer Verbundfolie (3), Displayfolie (5) und zweiter thermoplastischer Verbundfolie (4) in einer Prägevorrichtung, mindestens umfassend eine erste Platte (9.1) mit einer ersten Prägeauflage (10.1) und eine zweite Platte (9.2) mit einer zweiten Prägeauflage (10.2), flächig zwischen der ersten Prägeauflage (10.1) und der zweiten Prägeauflage (10.2) eingelegt wird und der Schichtstapel durch Zusammendrücken der ersten Platte (9.1) und der zweiten Platte (9.2) unter Erwärmen zu einem Vorverbund (6) verbunden wird und wobei die erste Prägeauflage (9.1) und/oder die zweite Prägeauflage (9.2) an der der ersten thermoplastischen Verbundfolie (3) und/oder der zweiten thermoplastischen Verbundfolie (4) zugewandten Oberfläche eine mittlere Rautiefe $R_z$ von mindestens 20 μm gemäß DIN EN ISO 4768:1990 aufweisen.

**12.** Verbundscheibe (100) enthaltend eine Displayfolie (5) hergestellt in einem Verfahren nach einem der Ansprüche 1 bis 11, mindestens umfassend in dieser Reihenfolge

- eine erste Scheibe (1),
- erste thermoplastische Verbundfolie (3), die eine Dicke von 25 μm bis 100 μm und einen Weichmachergehalt von kleiner oder gleich 10 Gew.- % aufweist,
- eine Displayfolie (5) umfassend eine diffus reflektierende Beschichtung oder eine strukturierte diffus reflektierende Oberfläche,
- eine zweite thermoplastische Verbundfolie (4), die eine Dicke von mindestens 0,3 mm und einen Weichmachergehalt von größer oder gleich 15 Gew.-% aufweist, und
- eine zweite Scheibe (2),

wobei die erste Scheibe (1), die erste thermoplastische Verbundfolie (3) und die Displayfolie (5) unmittelbar benachbart zueinander angeordnet sind und die erste Scheibe (1) die Innenscheibe einer Kraftfahrzeugverglasung ist.

**13.** Verbundscheibe (100) nach Anspruch 12, wobei die Displayfolie (5) eine Trägerfolie umfassend Polyethylen (PE), Polyethylenterephthalat (PET), Polymethylmethacrylat (PMMA), Triacetylcellulose (TAC) und/oder Polycarbonat enthält.

**14.** Verwendung einer Verbundscheibe (100) nach einem der Ansprüche 12 oder 13 als Windschutzscheibe oder Dachscheibe eines Fahrzeugs und die Displayfolie (5) als Projektionsfläche.

**Claims**

**1.** A method for producing a composite pane (100) having a display film (5), wherein at least

a) a first thermoplastic composite film (3) is structured by heating and applying pressure to at least one first surface (3a),
b) a layer stack consisting of at least the first thermoplastic composite film (3), the display film (5), and a second thermoplastic composite film (4) is created, which films are arranged on top of one another in this order in a planar manner, wherein the structured first surface (3a) of the first thermoplastic composite film (3) is arranged directly adjacent to the display film (5),
c) the layer stack consisting of the first thermoplastic composite film (3), the display film (5) and the second thermoplastic composite film (4) is bonded to form a pre-composite (6) by heating and applying pressure,
d) the pre-composite (6) is placed onto a first pane (1) or a second pane (2) and is covered with a second pane (2) or a first pane (1),
e) the layer stack consisting of the first pane (1), the pre-composite (6) and the second pane (2), in this order, is bonded by autoclaving to form a composite pane (100),

wherein the first thermoplastic composite film (3) has a thickness of 25 μm to 100 μm and a plasticiser content of less than or equal to 10 wt.%, and the second thermoplastic composite film (4) has a thickness of at least 0.3 mm and a plasticiser content of greater than or equal to 15 wt.%.

**2.** The method according to claim 1, wherein at least the first surface (3a) of the first thermoplastic composite film (3) has a mean roughness depth $R_z$ of at least 15 μm according to DIN EN ISO 4768:1990 after step a).

**3.** The method according to claim 1 or 2, wherein in step a) the first thermoplastic composite film (3) is placed in an embossing device, at least comprising a first plate (9.1) having a first embossing overlay (10.1) and a second plate (9.2) having a second embossing overlay (10.2), in a planar manner between the first embossing overlay (10.1) and the second embossing overlay (10.2), and the first thermoplastic composite film (3) is provided with surface structuring by pressing together the first plate (9.1) and the second plate (9.2), and wherein the first embossing overlay (9.1) and/or the second embossing overlay (9.2), on the surface facing the first thermoplastic composite film (3), have a mean roughness depth $R_z$ of at least 20 $\mu$m according to DIN EN ISO 4768:1990.

4. The method according to claim 3, wherein the first thermoplastic composite film (3) is embossed at a temperature from 60°C to 120°C, preferably 80°C to 110°C.

5. The method according to any of claims 1 to 4, wherein the second thermoplastic composite film (4) is embossed by heating and application of pressure before step c).

6. The method according to claim 5, wherein before step c) the second thermoplastic composite film (4) is placed in an embossing device, at least comprising a first plate (9.1) having a first embossing overlay (10.1) and a second plate (9.2) having a second embossing overlay (10.2), in a planar manner between the first embossing overlay (10.1) and the second embossing overlay (10.2), and the first thermoplastic composite film (3) is provided with surface structuring by pressing together the first plate (9.1) and the second plate (9.2), and wherein the first embossing overlay (9.1) and/or the second embossing overlay (9.2), on the surface facing the second thermoplastic composite film (4), have a mean roughness depth $R_z$ of at least 20 $\mu$m according to DIN EN ISO 4768:1990.

7. The method according to claim 6, wherein the second thermoplastic composite film (4) is embossed at a temperature from 60°C to 120°C, preferably 80°C to 110°C.

8. The method according to any of claims 1 to 7, wherein the second thermoplastic composite film (4) contain at least 20 wt.%, preferably at least 30 wt.%, and in particular at least 40 wt.%, of a plasticiser, and the plasticiser preferably contains or consists of diesters of aliphatic tri- or tetraethylene glycol, particularly preferably triethylene glycol bis(2-ethylhexanoate).

9. The method according to any of claims 1 to 8, wherein the first thermoplastic composite film (4) contains a plasticiser content of less than or equal to 5 wt.%, preferably less than or equal to 0.5 wt.%, and particularly preferably is substantially plasticiser-free.

10. The method according to any of claims 1 to 9, wherein the thermoplastic composite films (3, 4) contain at least 60 wt.%, preferably at least 70 wt.%, particularly preferably at least 90 wt.%, and in particular at least 97 wt.% polyvinyl butyral (PVB).

11. The method according to any of claims 1 to 10, wherein in step c) the layer stack consisting of the first thermoplastic composite film (3), the display film (5), and the second thermoplastic composite film (4), in this order, is placed in an embossing device, at least comprising a first plate (9.1) having a first embossing overlay (10.1) and a second plate (9.2) having a second embossing overlay (10.2), in a planar manner between the first embossing overlay (10.1) and the second embossing overlay (10.2), and the layer stack is bonded to form a pre-composite (6) by pressing together the first plate (9.1) and the second plate (9.2) with heating, and wherein the first embossing overlay (9.1) and/or the second embossing overlay (9.2), on the surface facing the first thermoplastic composite film (3) and/or the second thermoplastic composite film (4), has a mean roughness depth $R_z$ of at least 20 $\mu$m according to DIN EN ISO 4768:1990.

12. A composite pane (100) comprising a display film (5) produced in a method according to any of claims 1 to 11, at least comprising, in this order,

- a first pane (1),
- a first thermoplastic composite film (3) having a thickness of 25 $\mu$m to 100 $\mu$m and a plasticizer content of less than or equal to 10 wt.%,
- a display film (5) comprising a diffusely reflective coating or a structured diffusely reflective surface,
- a second thermoplastic composite film (4) having a thickness of at least 0.3 mm and a plasticiser content of greater than or equal to 15 wt.%, and
- a second pane (2),

wherein the first pane (1), the first thermoplastic composite film (3) and the display film (5) are arranged directly adjacent to one another, and the first pane (1) is the inner pane of motor vehicle glazing.

13. The composite pane (100) according to claim 12, wherein the display film (5) contains a carrier film comprising polyethylene (PE), polyethylene terephthalate (PET), polymethyl methacrylate (PMMA), triacetyl cellulose (TAC) and/or polycarbonate.

14. A use of a composite pane (100) according to either of claims 12 or 13 as a windshield or roof panel of a vehicle, and the display film (5) as a projection surface.

**Revendications**

1. Procédé de fabrication d'un vitrage composite (100) comportant un film d'affichage (5), dans lequel au moins

   a) un premier film composite thermoplastique (3) est structuré en chauffant et en appliquant de la pression sur au moins une première surface (3a),
   b) un empilement de couches est créé à partir d'au moins un premier film composite thermoplastique (3), d'un film d'affichage (5) et d'un second film composite thermoplastique (4), superposés à plat dans cet ordre, dans lequel la première surface (3a) structurée du premier film composite thermoplastique (3) est disposée de manière immédiatement adjacente au film d'affichage (5),
   c) l'empilement de couches constitué d'un premier film composite thermoplastique (3), d'un film d'affichage (5) et d'un second film composite thermoplastique (4) est assemblé en un précomposite (6) en chauffant et en appliquant de la pression,
   d) le précomposite (6) est posé sur une première vitre (1) ou une seconde vitre (2) et est recouvert d'une seconde vitre (2) ou d'une première vitre (1),
   e) l'empilement de couches constitué, dans cet ordre, d'une première vitre (1), d'un précomposite (6) et d'une seconde vitre (2) est assemblé en un vitrage composite (100) par autoclavage,

   dans lequel le premier film composite thermoplastique (3) présente une épaisseur allant de 25 $\mu$m à 100 $\mu$m et une teneur en plastifiant inférieure ou égale à 10 % en poids et le second film composite thermoplastique (4) présente une épaisseur d'au moins 0,3 mm et une teneur en plastifiant supérieure ou égale à 15 % en poids.

2. Procédé selon la revendication 1, dans lequel au moins la première surface (3a) du premier film composite thermoplastique (3) présente, après l'étape a), une profondeur de rugosité moyenne $R_z$ d'au moins 15 $\mu$m selon la norme DIN EN ISO 4768:1990.

3. Procédé selon la revendication 1 ou 2, dans lequel le premier film composite thermoplastique (3) à l'étape a) est inséré dans un dispositif de gaufrage, comprenant au moins une première plaque (9.1) comportant un premier support de gaufrage (10.1) et une seconde plaque (9.2) comportant un second support de gaufrage (10.2), à plat entre le premier support de gaufrage (10.1) et le second support de gaufrage (10.2) et le premier film composite thermoplastique (3) est pourvu d'une structuration de surface par compression de la première plaque (9.1) et de la seconde plaque (9.2) et dans lequel le premier support de gaufrage (9.1) et/ou le second support de gaufrage (9.2) présentent, sur la surface tournée vers le premier film composite thermoplastique (3), une profondeur de rugosité moyenne $R_z$ d'au moins 20 $\mu$m selon la norme DIN EN ISO 4768:1990.

4. Procédé selon la revendication 3, dans lequel le premier film composite thermoplastique (3) est gaufré à une température allant de 60 °C à 120 °C, de préférence de 80 °C à 110 °C.

5. Procédé selon l'une des revendications 1 à 4, dans lequel le second film composite thermoplastique (4) est gaufré par chauffage et application de pression avant l'étape c).

6. Procédé selon la revendication 5, dans lequel le second film composite thermoplastique (4) est inséré, avant l'étape c), dans un dispositif de gaufrage, comprenant au moins une première plaque (9.1) comportant un premier support de gaufrage (10.1) et une seconde plaque (9.2) comportant un second support de gaufrage (10.2), à plat entre le premier support de gaufrage (10.1) et le second support de gaufrage (10.2) et le premier film composite thermoplastique (3) est pourvu d'une structuration de surface par compression de la première plaque (9.1) et de la seconde plaque (9.2) et dans lequel le premier support de gaufrage (9.1) et/ou le second support de gaufrage (9.2) présentent, sur la surface tournée vers le second film composite thermoplastique (4), une profondeur de rugosité moyenne $R_z$ d'au moins 20 µm selon la norme DIN EN ISO 4768:1990.

7. Procédé selon la revendication 6, dans lequel le second film composite thermoplastique (4) est gaufré à une température allant de 60 °C à 120 °C, de préférence de 80 °C à 110 °C.

8. Procédé selon l'une des revendications 1 à 7, dans lequel le second film composite thermoplastique (4) contiennent au moins 20 % en poids, de préférence au moins 30 % en poids et en particulier au moins 40 % en poids d'un plastifiant et le plastifiant contient de préférence des diesters aliphatiques du triéthylène glycol ou du tétraéthylène glycol, de manière particulièrement préférée du bis-(2-éthylhexanoate) de triéthylène glycol, ou est constitué de ceux-ci.

9. Procédé selon l'une des revendications 1 à 8, dans lequel le premier film composite thermoplastique (4) contient une teneur en plastifiant inférieure ou égale à 5 % en poids, de préférence inférieure ou égale à 0,5 % en poids, et de manière particulièrement préférée est sensiblement exempt de plastifiant.

10. Procédé selon l'une des revendications 1 à 9, dans lequel les films composites thermoplastiques (3,4) contiennent au moins 60 % en poids, de préférence au moins 70 % en poids, de manière particulièrement préférée au moins 90 % en poids et en particulier au moins 97 % en poids de polyvinyl butyral (PVB).

11. Procédé selon l'une des revendications 1 à 10, dans lequel, à l'étape c), l'empilement de couches constitué, dans cet ordre, d'un premier film composite thermoplastique (3), d'un film d'affichage (5) et d'un second film composite thermoplastique (4) est inséré dans un dispositif de gaufrage, comprenant au moins une première plaque (9.1) comportant un premier support de gaufrage (10.1) et une seconde plaque (9.2) comportant un second support de gaufrage (10.2), à plat entre le premier support de gaufrage (10.1) et le second support de gaufrage (10.2) et l'empilement de couches est assemblé par chauffage en un précomposite (6) par compression de la première plaque (9.1) et de la seconde plaque (9.2) et dans lequel le premier support de gaufrage (9.1) et/ou le second support de gaufrage (9.2) présentent, sur la surface tournée vers le premier film composite thermoplastique (3) et/ou vers le second film composite thermoplastique (4), une profondeur de rugosité moyenne $R_z$ d'au moins 20 µm selon la norme DIN EN ISO 4768:1990.

12. Vitrage composite (100) contenant un film d'affichage (5) fabriqué dans un procédé selon l'une des revendications 1 à 11, comprenant au moins dans cet ordre

   - une première vitre (1),
   - un premier film composite thermoplastique (3) qui présente une épaisseur allant de 25 µm à 100 µm et une teneur en plastifiant inférieure ou égale à 10 % en poids,
   - un film d'affichage (5) comprenant un revêtement réfléchissant de manière diffuse ou une surface structurée réfléchissante de manière diffuse,
   - un second film composite thermoplastique (4) qui présente une épaisseur d'au moins 0,3 mm et une teneur en plastifiant supérieure ou égale à 15 % en poids, et
   - une seconde vitre (2),

   dans lequel la première vitre (1), le premier film composite thermoplastique (3) et le film d'affichage (5) sont disposés de manière immédiatement adjacente les uns aux autres et la première vitre (1) est la vitre intérieure d'un vitrage de véhicule automobile.

13. Vitrage composite (100) selon la revendication 12, dans lequel le film d'affichage (5) contient un film de support comprenant du polyéthylène (PE), du polyéthylène téréphtalate (PET), du polyméthacrylate de méthyle (PMMA), du triacétate de cellulose (TAC) et/ou du polycarbonate.

14. Utilisation d'un vitrage composite (100) selon l'une des revendications 12 ou 13 comme pare-brise ou vitre de toit d'un véhicule et le film d'affichage (5) comme surface de projection.

**Figur 1a**

**Figur 1b**

**Figur 2a**

**Figur 2b**

**Figur 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170320297 A1
- EP 2670594 A1
- EP 2856256 A1
- EP 3151062 A1
- WO 2017204103 A1
- WO 2016175183 A1
- WO 2012104547 A1